(19) Europäisches Patentamt

European Patent Office

Office européen des brevets

(11) EP 0 853 739 B1

(12) FASCICULE DE BREVET EUROPEEN

(45) Date de publication et mention
de la délivrance du brevet:
**24.03.1999 Bulletin 1999/12**

(21) Numéro de dépôt: **96932646.1**

(22) Date de dépôt: **25.09.1996**

(51) Int Cl.⁶: **F16L 9/12**

(86) Numéro de dépôt international:
**PCT/FR96/01493**

(87) Numéro de publication internationale:
**WO 97/13091 (10.04.1997 Gazette 1997/16)**

(54) **CONDUITE FLEXIBLE A ARMURE TEXTILE**

BIEGSAMES ROHR MIT TEXTILER ARMIERUNG

FLEXIBLE DUCT WITH A TEXTILE REINFORCEMENT

(84) Etats contractants désignés:
**AT BE CH DE DK ES FI FR GB GR IE IT LI LU MC NL PT SE**

(30) Priorité: **04.10.1995 FR 9511675**

(43) Date de publication de la demande:
**22.07.1998 Bulletin 1998/30**

(73) Titulaire: **COFLEXIP**
**75116 Paris (FR)**

(72) Inventeurs:
• **LE NOUVEAU, Joel**
  **F-76480 Yainville (FR)**
• **DO, Anh Tuan**
  **F-95240 Cormeilles-en-Parisis (FR)**

(74) Mandataire: **Levy, David et al**
**c/o S.A. FEDIT-LORIOT & AUTRES**
**CONSEILS EN PROPRIETE INDUSTRIELLE**
**38, Avenue Hoche**
**75008 Paris (FR)**

(56) Documents cités:
EP-A- 0 071 188          EP-A- 0 074 747
EP-A- 0 439 898          WO-A-92/01885
DE-A- 3 907 785          FR-A- 2 699 979
US-A- 4 104 095

## Description

La présente invention concerne une conduite flexible à armure textile et plus particulièrement une conduite flexible pour véhiculer un fluide sous haute pression et dont le diamètre interne est supérieur à environ 4 cm.

De telles conduites sont utilisées pour véhiculer par exemple du gaz, du pétrole, de l'eau ou d'autres fluides sur des grandes distances et sous des pressions de plusieurs centaines de bars.

La structure de ces conduites, dans sa forme la plus simple, comprend au moins :

- un tube interne d'étanchéité dans lequel circule le fluide,
- une armure disposée autour dudit tube interne et dont la fonction est de résister à la pression régnant à l'intérieur du tube interne et aux diverses forces extérieures,
- et le cas échéant, une gaine externe de protection et/ou d'étanchéité disposée autour de l'armure.

Les améliorations et autres perfectionnements apportés aux conduites de ce type concernent généralement mais non exclusivement l'armure.

Dans une forme de réalisation connue, l'armure est réalisée par tressage de mèches filamentaires autour d'un tube interne d'étanchéité en matière synthétique. Une telle technique d'armage présente des inconvénients et celui notamment de limiter le diamètre interne du tube interne d'étanchéité à des valeurs inférieures à 4 cm, ce qui restreint considérablement l'utilisation de la conduite flexible. En effet, au-delà de 4 cm, les moyens à mettre en oeuvre pour réaliser les tresses appropriées sont prohibitifs car ils impliquent un grand nombre de grandes bobines de mèches filamentaires et des organes de manutention considérables en raison du poids des bobines. Avec les moyens disponibles actuellement, il est très difficile pour ne pas dire impossible de réaliser un armage serré recouvrant parfaitement le tube interne d'étanchéité sur de très grandes longueurs (par exemple supérieures à 1 km pour un diamètre interne de 5 cm). Or, un armage serré ou un recouvrement complet du tube interne est nécessaire pour obtenir une bonne résistance de la conduite flexible. Dans le cas où on privilégie un armage serré ou un bon taux de recouvrement du tube interne, donc la résistance à la pression interne, on est contraint de réduire la longueur des conduites obtenues en continu. Il en résulte que pour véhiculer des fluides sur de grandes distances, on est obligé de raccorder bout à bout plusieurs conduites par des embouts de raccordement, ce qui a l'inconvénient d'être onéreux et d'induire des zones de faiblesse dans la conduite sur le plan de l'étanchéité.

En outre, le fait d'effectuer un tressage très serré ralentit sensiblement les cadences de production des conduites.

Enfin, le tressage de mèches filamentaires implique un grand nombre d'entrecroisements des mèches filamentaires, avec comme conséquence un rendement faible qui est d'autant plus diminué que le nombre de couches tressées superposées est élevé car on s'est aperçu que les couches les plus éloignées de l'axe longitudinal (central) du tube interne participaient moins que les autres à la résistance à la pression exercée sur la paroi interne du tube interne.

Dans une autre forme de réalisation, l'armure est constituée par une ou plusieurs paires de nappes croisées, chaque nappe étant réalisée par un enroulement spiralé de groses mèches telles que des cordes ou torons de section sensiblement circulaire, les spires étant plus ou moins jointives. Cette technique présente l'inconvénient de provoquer un phénomène de rotation du tube interne lorsqu'il est sous pression, les mèches d'armure ayant des allongements inégaux d'une nappe à l'autre. Or, un tel phénomène peut endommager le tube interne et réduire l'efficacité de la conduite flexible.

Le document US 4 104 095 décrit un flexible constitué d'un tube plastique interne sur lequel est enroulé un ruban de tissu de verre, l'ensemble étant ensuite chauffé de manière à réaliser un accrochage intime de la gaine plastique et du tissu de verre, par fusion superficielle de la gaine et fluage dans les espaces libres du tissu de verre, on réalise ainsi ce qu'il est convenu d'appeler un flexible "bonded".

Le brevet EP-539 429 concerne une conduite composite dans laquelle un fluide sous haute pression peut circuler. La conduite comprend un tube interne en matière thermoplastique, une ou plusieurs couches d'un matériau en bande enroulé autour d'un tube interne et une gaine externe de protection. La bande peut être de matière fibreuse imprégnée ou non de matière plastique, éventuellement renforcée par une toile tissée avec des fibres ou du métal. Dans une forme de réalisation les spires de la première couche ne sont pas jointives et le recouvrement de l'espace entre spires est obtenu par la ou les couches consécutives disposées au-dessus de ladite première couche, chacune des couches étant reliée à la couche adjacente par soudage de ses extrémités, la première couche pouvant être quant à elle, reliée au tube interne. Dans une autre forme de réalisation, les spires de chaque enroulement sont jointives et leur liaison est obtenue par des points de soudure sur les bords adjacents des spires.

Une telle conduite pourrait paraître satisfaisante mais en réalité il n'en est rien. En effet, si le flexible ne comporte qu'une bande d'enroulement, alors seule la deuxième forme de réalisation peut être mise en oeuvre. Cette dernière présente l'inconvénient majeur de correspondre à un tube rigide et non pas flexible en ce sens que les bandes d'armure n'ont pas la possibilité de se déplacer en fonction de l'incurvation possible de la conduite.

L'inconvénient principal de la première forme de réalisation est de nécessiter au moins trois couches superposées dont au moins deux doivent être enroulées dans le même sens pour permettre le recouvrement des espaces entre les spires non jointives de la couche inférieure.

Enfin et surtout, et cela est vrai pour les deux formes de réalisation, aucune indication et/ou suggestion n'est donnée sur la structure de la bande, hormis le fait qu'elle est de nature fibreuse imprégnée ou non de matière plastique et qu'elle peut être renforcée. En définitive, ce brevet n'enseigne ni ne suggère comment réaliser une conduite flexible optimisée c'est-à-dire une conduite présentant le meilleur rapport résistance/coût, tout en contrôlant les effets de rotation visés précédemment.

En effet, d'un strict point de vue industriel et économique, les deux termes du rapport résistance/coût ne sont pas cohérents entre eux. Dans l'art antérieur et jusqu'à maintenant, l'accroissement de la résistance s'est opéré au détriment du coût. Ainsi, par exemple, on a utilisé des fibres de plus en plus résistantes mais aussi très onéreuses, telles les fibres de carbone, polyamides aromatiques, etc. sans se préoccuper de leur rendement technique et économique. A l'heure actuelle, on cherche toujours à fabriquer une conduite flexible qui présente les qualités requises mais à un moindre coût.

C'est ce problème que résout la présente invention qui a pour but de proposer une conduite flexible optimisée tant sur le plan de la résistance à la pression interne et aux forces extérieures, notamment les forces de traction, que sur le plan économique, la conduite étant notamment de grand diamètre et de grande longueur.

Un autre but est de proposer une conduite flexible dans laquelle les matières utilisées pour son élaboration et/ou les sous-constituants tel le ruban d'armure présentent eux-mêmes le meilleur rapport résistance/coût.

Un autre but de la présente invention est de permettre une fabrication industrielle de la conduite flexible, plus facile et avec les moyens ou techniques existants sans faire appel à des techniques sophistiquées ou spécifiques et sans réduire les cadences de production de manière sensible.

La présente invention a pour objet une conduite flexible, du type comprenant au moins :

- un tube interne étanche,
- une armure comportant au moins une bande enroulée en spirale autour d'un axe central dudit tube interne caractérisée en ce que la bande est plate et comprend au moins une couche de mèches filamentaires longitudinales et des moyens d'assemblage desdites mèches filamentaires comportant une trame tissée lâche et de la matière de liage disposée au moins à l'interface desdites mèches filamentaires et de ladite trame, lesdits moyens d'assemblage étant agencés de manière à maintenir sur toute leur longueur les mèches longitudinales serrées l'une contre l'autre et à conférer une compacité au moins égale à 39 % à ladite bande.

Grâce à ces dispositions, la conduite flexible est optimisée tant sur le plan de la résistance à la pression interne que sur le plan économique ou en d'autres termes qu'elle présente le meilleur rapport résistance/prix.

Elle satisfait les critères de mise en oeuvre aisée du fait de l'utilisation de la technique d'armage avec enroulement spiralé ; elle peut être fabriquée en grand diamètre avec un bon taux de recouvrement et sous une grande longueur et ce, sans réduire de manière importante les cadences de production.

En outre, elle utilise une bande en tant que sous-constituant qui présente avantageusement un rapport résistance/coût optimisé.

Pour des raisons de commodité et de simplicité, la matière de liage est introduite à ladite interface par l'utilisation de fils de trame qui sont gainés de thermoplastique préalablement au tissage.

Selon une autre caractéristique de l'invention et pour améliorer la cohésion des mèches dans la bande ainsi que sa stabilité et une meilleure protection des mèches longitudinales contre tous risques d'abrasion, d'attaque chimique, on utilise des mèches qui sont gainées de thermoplastique préalablement au tissage du fil de trame.

D'autres avantages et caractéristiques ressortiront mieux à la lecture de la description de plusieurs modes de réalisation préférés de l'invention, ainsi que des dessins annexés sur lesquels :

- la figure 1 est une vue en coupe schématique et partielle d'une conduite flexible selon l'invention,
- la figure 2 est une vue en plan partielle du ruban tissé utilisé pour constituer l'armure de la conduite flexible selon la présente invention,
- la figure 3 est une vue en coupe et partielle du ruban de la figure 2,
- la figure 4 est une vue en coupe et partielle du ruban de la figure 2 selon un autre mode de réalisation.

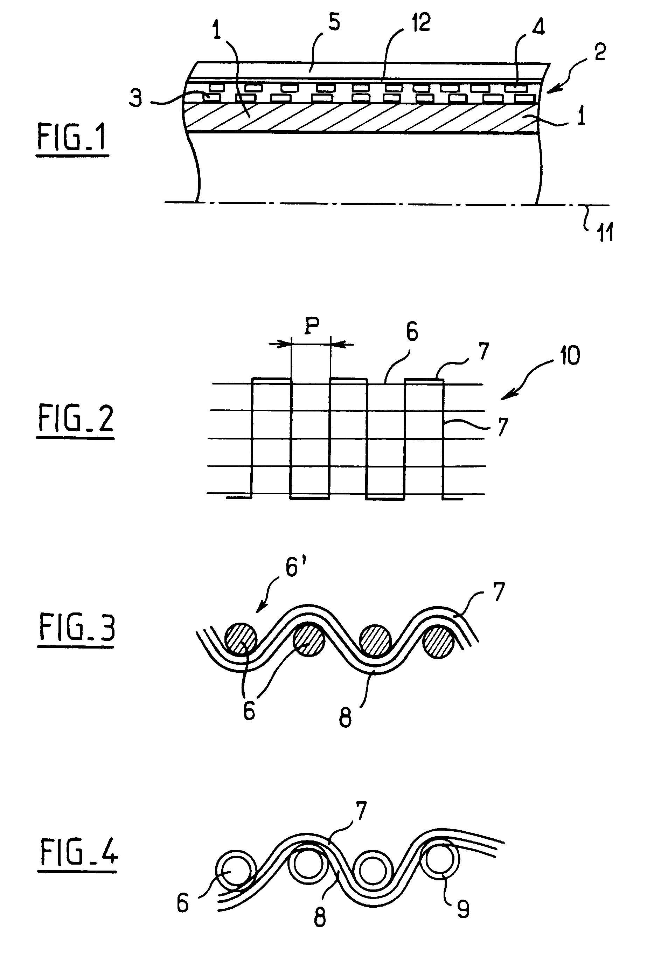

Dans l'exemple de réalisation de la conduite selon l'invention illustrée à la figure 1, celle-ci comprend de l'intérieur vers l'extérieur :

- un tube interne d'étanchéité 1 pour véhiculer un fluide sous pression, par exemple en thermoplastique, en l'occurrence du polyéthylène haute densité répondant à la norme NFT-54-065, dont les diamètres interne et externe sont respectivement de 73,6 mm et 90 mm ;
- une armure 2 constituée par deux nappes 3 et 4 comprenant une pluralité de bandes, typiquement appelées rubans d'armure, spiralées autour du tube d'étanchéité interne 1 et en sens opposés selon un angle d'environ 55°; et

- une couche externe 5 constituée par une gaine de protection, par exemple réalisée dans un matériau thermoplastique tel que du polyéthylène et d'épaisseur d'environ 4 mm.

Selon un mode préféré de réalisation de la présente invention, le fil d'armure des nappes 3 et 4 est constitué par un ruban plat 10, comprenant des fils de chaîne longitudinaux 6 formant une couche 6' de mèches filamentaires longitudinales et des moyens d'assemblage desdits fils de chaîne comportant des fils de trame 7 et de la matière de liage 8. Les moyens d'assemblage sont agencés de manière à maintenir sur toute leur longueur les fils de chaîne serrés l'un contre l'autre en conférant au ruban au repos une certaine compacité telle que définie infra.

Dans l'exemple (figure 2), la trame assemble les fils de chaîne par tissage de manière lâche, c'est-à-dire avec un pas P entre deux passages successifs qui soit nettement supérieur à la valeur habituellement utilisée, de préférence supérieur à 5 fois le diamètre du fil de trame. De bons résultats ont été obtenus avec un pas égal à environ 0,5 cm. Grâce à cette disposition, les mèches ont une bonne stabilité dimensionnelle dans le sens de la largeur notamment, et on minimise leur déchéance. A cet égard, on rappelle que la déchéance exprime en pourcentage une perte de ténacité des mèches lorsqu'elles sont assemblées par rapport à la ténacité de la mèche prise individuellement.

Le fil de chaîne longitudinal 6 est, de préférence, une mèche filamentaire de haute ténacité, par exemple en fibres polyamides aromatiques telles que des fibres d'aramide, ou encore en fibres de carbone, de verre, etc. Dans l'exemple représenté, il s'agit de fibres d'aramide de 330 tex et plus précisément de filaments continus en aramide, groupés ensemble par retordage.

La trame est considérée au sens de l'invention comme tout élément à base de fils disposés transversalement aux mèches par rapport à la direction longitudinale du ruban, obliquement ou perpendiculairement, de manière à les maintenir serrées les unes contre les autres, la trame tissée étant un mode de réalisation pratique. La trame est disposée de manière à entrelacer les mèches longitudinales en les prenant au moins une par une et en traversant la couche 6'.

Le fil de trame 7 peut être un fil de 44 tex en fibres de polyamide aromatique, un fil de 56 tex en fibres de polyester ou un fil de 70 tex en fibres de verre, bien que d'autres matières et d'autres titres puissent convenir. De préférence, le diamètre du fil de trame 7 est sensiblement égal à environ un tiers du diamètre de fil de chaîne 6.

Selon l'invention, une matière de liage 8 est disposée au moins à l'interface entre les mèches longitudinales 6 et les fils de trame 7. Dans une forme de réalisation préférée, figure 3, le fil de trame 7 est gainé d'une gaine thermoplastique qui adhère fortement, après mise en forme du ruban, aux mèches longitudinales 6 de telle sorte que le ruban ne soit pas ajouré, aucun jeu ou espace d'air n'existant entre lesdites mèches longitudinales 6. Dans les cas où les mèches sont très serrées, elles peuvent se chevaucher par endroits au lieu d'être côte à côte sur une rangée. Elles se chevauchent notamment au niveau de chaque trame tissée, et cessent de se chevaucher dans une zone située à mi-distance entre deux trames consécutives.

La matière de liage est choisie parmi les matières aptes à lier les mèches directement ou indirectement par adhérence physique et/ou chimique et à suivre leur déformation notamment en allongement. Il a été constaté que les matériaux de dureté allant jusqu'à environ 60 shore D, convenaient dans un ruban comportant des mèches de faisceau en aramide.

La matière de liage peut être choisie parmi les thermoplastiques tel que les polyamides, polyoléfines, vinyliques, fluorés, notamment les copolymères thermoplastiques et les thermoplastiques élastomères, ou bien parmi les élastomères tels que caoutchouc naturel ou synthétique, polyuréthane, silicone. Les thermodurcissables tels que PTFE, certains polyuréthanes, sont envisageables également à condition toutefois de les employer en faible proportion de manière à conserver une flexibilité au ruban.

Une préférence est donnée aux matériaux thermoplastiques pour leur facilité de mise en oeuvre dans la fabrication du ruban.

Dans une autre forme de réalisation, les fils de chaîne ou mèches filamentaires 6 sont disposées chacun dans une gaine de thermoplastique 9 ainsi que cela est représenté sur la figure 4, les fils de trame 7 étant également gainés. On constate avantageusement que le gainage des mèches longitudinales améliore leur compacité individuelle dans le ruban, celui-ci étant notamment au repos.

Dans une autre forme de réalisation (non représentée), les fils de chaîne sont gainés de thermoplastique tandis que le ou les fils de trame ne le sont pas. Il en résulte que la trame est quant à elle stabilisée malgré le pas lâche suivi par elle ; d'autre part, cela permet d'éviter une opération de gainage de la trame par du thermoplastique.

Après tissage le ruban est calandré à chaud.

On estime que le ruban est susceptible de convenir pour l'invention lorsqu'il présente au repos un taux de fibres ou compacité supérieur à 39 %. Ce taux correspond au taux d'un ruban constitué de n mèches en aramide, il par exemple, de 330 tex de diamètre au repos égal à 0,765 mm avec l'hypothèse que les mèches ont dans cet état une compacité de 50 % environ, les mèches étant côte à côte sur un même plan c'est-à-dire jointives. De préférence, le ruban doit avoir une déchéance inférieure à 10 %.

Dans l'exemple, le ruban plat comprend il mèches longitudinales 6 en fibres de polyamide aromatique de 330 tex chacune et une trame en fibres de polyester de 56 tex gainée de co-polyamide avec un pas de 0,5 cm. La résistance en traction du ruban est de l'ordre de 191 cN/tex (695 daN) avec un allongement à la rupture de l'ordre de 3,7 % et une déchéance égale à 6 %.

Le ruban ainsi réalisé a un remplissage en largeur correspondant à 4537,5 tex/cm ou selon un aspect différent en terme de compacité à un taux de fibres dans le ruban égal à 53 %. Ce taux est égal à s/S, s étant la surface transversale occupée par les fibres et S la surface du rectangle enveloppant la section transversale du ruban.

On détermine la surface du rectangle enveloppant la section du ruban, en considérant ses dimensions lorsqu'il est au repos.

Son épaisseur peut être mesurée par exemple en prenant la distance séparant deux plaques placées en dessous et au-dessus du ruban avec une pression exercée sur le ruban inférieure à 10 g/cm². Sa largeur peut être mesurée quand il est sous cette pression.

Quant à la surface occupée par les fibres elle peut être déterminée en considérant le titre des mèches longitudinales et la densité de la fibre constituant chaque mèche.

Dans l'exemple, la largeur mesurée est égale à 8 mm et son épaisseur est égale à 0,6 mm. La surface s égale à 0,254 mm² a été obtenue en considérant la densité des mèches égale à 1440 kg/m³.

Dans le cas où les mèches longitudinales sont gainées de matière de liage, on détermine sa proportion en effectuant une coupe micrographique et une analyse d'image par exemple à l'aide de matériel " Photoshop " et " Optilab ". Les autres constituants peuvent éventuellement être déterminés de manière identique.

Le ruban tissé étant calandré à chaud et, dans le cas où les mèches longitudinales 6 sont gainées de thermoplastique, il est recommandé de maintenir de l'air entre les fibres des mèches, de manière à conserver une bonne flexibilité ou souplesse au ruban, par exemple en préservant un taux d'air dans chaque mèche égal à environ 23 %, et de l'ordre de 16 % par rapport à la surface de la section transversale réelle du ruban. Dans l'exemple (figure 4), le taux de matière de liage dans le ruban est de 33 %.

D'une manière générale, on a constaté que les proportions des différents constituants du ruban au repos susceptibles de convenir peuvent être choisies de la manière ci-après.

Dans le cas où les mèches longitudinales ne sont pas gainées de thermoplastique, chaque mèche comprend au moins 50 % de fibres alors que le taux de fibres dans le ruban, en considérant le rectangle enveloppant, est supérieur ou égal à 39 %. La quantité de matière de liage dans le ruban correspond dans ce cas à la quantité de matière nécessaire pour le gainage de la trame.

Dans le cas où les mèches longitudinales sont gainées de thermoplastique, il convient de mesurer les proportions respectives des constituants par analyse d'image en considérant la surface réellement occupée par la section du ruban et non pas la section du rectangle enveloppant, ceci afin d'avoir des proportions plus représentatives. Les proportions susceptibles de convenir sont alors :

- Fibres dans chaque mèche : 60 % à 90 %
- Fibres dans le ruban supérieur à 50 % environ
- Matière de liage : 5 à 40 %, et de préférence 20 à 35 %
- Air dans la mèche de 5 à 40 % et de préférence 10 % à 30 %.

Dans le mode de réalisation représenté sur la figure 1, l'armure 2 comprend deux nappes d'armure 3, 4 superposées, comportant chacune une pluralité de rubans d'armure 10, les rubans de la première nappe 3 étant enroulés par exemple selon un angle compris entre 54 et 56° par rapport à l'axe il de la conduite flexible, tandis que ceux de la deuxième nappe 4 sont enroulés en sens opposé. Par exemple, l'angle d'armage d'une nappe peut être inférieur à 55° et l'angle d'armage de l'autre nappe supérieur à 55°. Avec un tel angle d'orage, on maintient à un niveau faible l'allongement de ladite conduite flexible. D'une manière générale, il a été trouvé que le ruban doit répondre aux conditions ci-après pour satisfaire aux objectifs de l'invention. Il doit présenter principalement une forte compacité, une bonne stabilité dimensionnelle, une équi-tension de toutes les mèches lorsqu'il est sollicité en étant en appui sur une surface incurvée, ainsi qu'une faible déchéance. Le ruban étant enroulé sous tension au cours de l'armage, sa compacité devient supérieure à sa compacité au repos. Le taux de fibres à l'intérieur de chaque mèche peut avoisiner un taux maximal théorique de 90 %. Ainsi la conduite selon l'invention a l'avantage de minimiser le phénomène de rotation susceptible de l'endommager.

Autour de l'armure 2 et selon une autre caractéristique de l'invention, un ruban de démoulage ou antiadhésion 12 est enroulé avec recouvrement autour de la deuxième nappe d'armure 4, de manière à la recouvrir entièrement afin de la séparer de la gaine externe de protection de la conduite flexible. Ainsi, la gaine externe de protection n'est pas susceptible d'imprégner les rubans d'armure 10, de sorte que la conduite flexible obtenue est du type "non-bonded" conformément à la désignation API (American Petroleum Institute). Le ruban antiadhésion peut être réalisé en MYLAR, TERPHANE ou à partir d'une feuille téflonnée d'épaisseur comprise entre 0,5 et 2 mm et, de préférence, entre 0,75 et 1,5 mm.

Une conduite flexible conforme au mode de réalisation décrit ci-dessus de diamètre interne égal à 5 cm (2 pouces) présente un poids linéaire de 3,61 kg/m et une pression d'éclatement P de l'ordre de 254 bar. Sur le plan économique, on constate que la quantité de fibres Q nécessaire par mètre linéaire de conduite est de l'ordre de 180 g, ce qui donne une quantité de fibres Q par mètre de conduite et par unité de pression d'éclatement Q/P égale environ 0,7 g/m.bar (= 180/254).

Les essais effectués sur des conduites flexibles de diamètre plus élevé, par exemple avec un diamètre interne de 152,4 mm (6 pouces) et un diamètre externe de 187 mm, montrent qu'on obtient une conduite flexible dont le poids est de 8,58 kg/m, une pression d'éclatement P de 138 bar et une quantité Q de fibres égale à 500 g/m, ceci conduisant à un rapport Q/P égal à 500/138 = 3,6 g/m bar.

Les résultats donnés ci-dessus concernent des rubans dont les mèches longitudinales sont en aramide, mais il va de soi qu'une optimisation au sens de l'invention pourrait être atteinte avec des mèches de nature diverse telles que fibres de carbone, céramique, verre pour ce qui est de la haute ténacité, ou pour une moyenne ténacité avec des fils de polyester.

D'une manière générale, au sens de l'invention, le tube interne étanche peut être :

- un tube polymérique, par exemple en thermoplastique ...
- un tube métallique enroulable, par exemple un tube onduleux ;
- une combinaison des deux.

Dans le cas où le tube interne étanche est un tube polymérique, la conduite peut avoir l'inconvénient de s'ovaliser ou de présenter une faiblesse à l'encontre d'une pression d'écrasement externe. Cette faiblesse peut provenir par exemple de la pression exercée par le matériel de préhension et de manutention de la conduite ou du passage de la conduite sur un support incurvé ou de la pression hydrostatique en cas d'utilisation en eau profonde, par exemple 1000 m.

Pour pallier cet inconvénient, la conduite peut comprendre de manière connue en soi, un tube flexible résistant à l'écrasement, par exemple une carcasse non étanche en feuillard agrafé ou en fil de forme agrafé et spiralé à faible pas. Selon l'usage de la conduite, ledit tube résistant à l'écrasement peut être à l'intérieur ou à l'extérieur de la couche polymérique selon la conduite et respectivement de type " rough bore " ou " smooth bore ".

Il en résulte que l'armure peut être directement au contact de la couche polymérique ou directement d'un tube intermédiaire comme par exemple ledit tube flexible résistant à l'écrasement.

La gaine de protection peut quant à elle être de toute nature, par exemple un gainage polymérique extrudable de préférence ou un enroulement d'un ruban plastique.

Le choix d'une gaine extrudable, d'un ruban simple ou d'adhésif dépend de conditions d'utilisation.

L'objectif principal de cette couche de protection est d'empêcher :

- toutes sortes d'infiltration externe pouvant dégrader les couches d'armures et/ou toutes les agressions du type mécanique (abrasion, poinçonnage) ou du type physicochimique (hydrolyse, photochimique...).

Lorsque le flexible est utilisé pour le transport du gaz ou des produits multiphasiques avec du gaz, le gaz dans le temps, peut diffuser à travers le tube interne et peut s'accumuler dans l'espace annulaire entre la gaine d'étanchéité externe et les couches d'armures. Une certaine pression partielle, due à la diffusion de gaz, se développe dans l'espace annulaire. Cette pression partielle peut faire collapser le tube interne lorsque celui-ci n'a plus de pression interne, ou faire éclater la gaine de protection si les épaisseurs et les résistances du tube et de la gaine sont insuffisantes.

On peut techniquement diminuer la pression annulaire due à la diffusion du gaz :

- par création des points de ventilation (évacuer le gaz aux extrémités de connexion, perçage régulier de la gaine de protection),
- ou par sélection d'une matière polymérique pour la gaine de protection plus perméable que celle du tube interne,
- ou par utilisation d'un ruban simple ou avec adhésif en remplacement de la gaine d'étanchéité externe.

De manière à réduire la pression annulaire, il est préférable de sélectionner des matériaux utilisés pour la gaine externe 5 et le tube interne 1, tels que leurs coefficients de perméabilité respectifs $K_2$ et $K_1$ soient différents avec $K_2 > K_1$. Avantageusement, le rapport $K_2/K_1$ doit être au moins égal à 3 et de préférence égal à 4. De même, on choisira des épaisseurs $e_2$ pour la gaine externe 5 et $e_1$ pour le tube interne 1 qui soient différentes et avec $e_2$ notamment inférieure à $e_1$ ; par exemple le rapport $e_1/e_2$ doit être compris entre 3 et 4.

Des calculs ont été effectués pour déterminer si le coefficient de sécurité pour certains matériaux était respecté.

Dans un premier exemple, on se propose d'utiliser un matériau identique pour la gaine externe 5 et le tube interne 1, par exemple un polyéthylène haute densité, du type PE80, selon les normes NF T 5465 et NF T 5403, avec les paramètres suivants :

$e_1 = 3e_2$,
rayon interne du tube 1 $R_1 = 65,4$ mm,
rayon externe de la gaine 5 $R_2 = 82$ mm,
pression interne dans le tube 1 Pi = 20 bar,
pression dans l'espace annulaire $Pa = \frac{Pi}{4} = 5bar$

Les calculs de la contrainte $\sigma$ développée dans la gaine sont supérieurs à la contrainte maximum admise (MRS : Maximum Strength Required). Une telle solution est inacceptable.

Pour un autre exemple des matériaux pour la gaine 5 et le tube 1, tels que respectivement le PEBD et DOW 300 PE 32, on obtient un rapport $K_2/K_1$ sensiblement égal à 4 ($K_2 = 1,4 \times 10^{-8}$ et $K_1 \approx 0,35 \times 10^{-8}$). En choisissant $e_1$, $e_2$, $R_1$ et $R_2$ tels que $R_2/R_1 = 1,26$ ; $e_1/e_2 = 3$ et une pression Pa = 1,27 bar, on trouve une valeur de σ égale à environ 2,14 MPa ou 21,4 bar, ce qui est acceptable. Le débit de fuite pour la conduite serait de l'ordre de $183 \times 10^{-8}$ cm$^3$/S c'est-à-dire de l'ordre de 5,6 m$^3$ pendant un an et un kilomètre de longueur.

Un matériau très approprié pour la gaine externe 5 est un alliage polyuréthane comme le PU ELASTOLLAN 1185 A de la société ELASTOGRAN.

Dans sa version la plus simple, la conduite peut se dispenser de gaine de protection. Elle peut comprendre uniquement un tube étanche et une armure à base du ruban conforme à l'invention. Ce cas est notamment envisageable avec un ruban en fibres de polyester.

Les conduites peuvent être équipées d'embouts de connexion de type connu, les extrémités des rubans étant fixées directement à l'embout comme pour des rubans d'armure métalliques.

Selon un autre mode de réalisation, non représenté, la conduite peut comprendre une armure comportant un ruban enroulé d'un faible pas, par exemple à 85°, et fonctionnant comme une voûte de pression résistant aux contraintes circonférentielles.

Selon encore un autre mode de réalisation, non représenté, la conduite peut comprendre une armure de traction comportant une pluralité de rubans spiralés autour de l'axe central de la conduite selon un angle inférieur à 55°, par exemple 30°. Cette armure de traction est posée, par exemple sur une voûte de pression.

Cette voûte de pression peut être avantageusement réalisée avec le ruban de l'invention comme indiqué ci-dessus ou avec un constituant en matériau relativement léger tel que fil de forme agrafé en alliage d'aluminium ou profilé en matériau composite FRP rigide.

Au sens de l'invention, on entend par mèches un ensemble ou groupe de fils continus, retordus ou non retordus ensemble, chaque fil pouvant être un monofilament ou un ensemble de fibres ou de filaments continus ou discontinus, assemblés notamment par retordage ou filage.

Le cas échéant, une mèche peut être obtenue par assemblage de plusieurs mèches élémentaires, par exemple par retordage, ou simplement par un groupage parallèle de plusieurs mèches élémentaires.

**Revendications**

1. Conduite flexible pour véhiculer un fluide sous haute pression, du type comprenant au moins :

   - un tube interne étanche (1),

   - une armure (2) comportant au moins une bande (10) enroulée en spirale autour d'un axe central (il) dudit tube interne, ladite bande (10) étant plate et comprenant au moins une couche de mèches filamentaires longitudinales (6) qui sont assemblées entre elles par des moyens d'assemblage comprenant des fils de trame tissés,

   caractérisée en ce que la trame est tissée avec un pas supérieur à cinq fois le diamètre du fil de trame, en ce que la matière de liage (8) est disposée au moins à l'interface desdites mèches filamentaires et de ladite trame, lesdits moyens d'assemblage étant agencés de manière à maintenir sur toute leur longueur les mèches longitudinales serrées l'une contre l'autre et à conférer une compacité au moins égale à 39 % à ladite bande.

2. Conduite flexible selon la revendication 1, caractérisée en ce que la déchéance des mèches dans la bande est inférieure à 10 %.

3. Conduite flexible selon l'une des revendications 1 ou 2, caractérisée en ce que l'armure comporte deux nappes superposées (3,4) constituées chacune d'une pluralité de bandes plates (10) enroulées en spirale en sens opposés d'une nappe à l'autre.

4. Conduite flexible selon la revendication 1, caractérisée en ce que le pas entre deux fils de trame consécutifs (7) est d'environ 0,5 cm.

5. Conduite flexible selon l'une des revendications 1 à 4, caractérisée en ce que le fil de trame(7) est gainé de thermoplastique.

6. Conduite flexible selon la revendication 1, caractérisée en ce que les mèches filamentaires longitudinales (6) comportent des fibres ou filaments en polyamide aromatique.

7. Conduite flexible selon la revendication 6, caractérisée en ce que chaque mèche filamentaire (6) est gainée de thermoplastique (9).

8. Conduite flexible selon l'une des revendications 1 à 5, caractérisée en ce que le fil de trame (7) est en fibres de polyamide aromatique.

9. Conduite flexible selon l'une des revendications 1 à 5, caractérisée en ce que le fil de trame (7) est en fibres de polyester.

10. Conduite flexible selon la revendication 1, caractérisée en ce qu'elle comprend, en outre, un ruban antiadhésion (12) enroulé avec recouvrement autour de la dernière nappe d'armure.

**11.** Conduite flexible selon la revendication 1, caractérisée en ce que la matière de liage (8,9) est inférieure à 40 % en volume du ruban plat d'armure.

**12.** Conduite flexible selon l'une des revendications précédentes, caractérisée en ce que le diamètre moyen du fil de trame (7) est égal à environ un tiers du diamètre du fil de chaîne (6).

**13.** Conduite flexible selon l'une quelconque des revendications précédentes, caractérisée en ce que le tube interne étanche est un tube métallique enroulable.

**14.** Conduite flexible selon l'une des revendications 1 à 12, caractérisée en ce que le tube interne étanche est un tube polymérique.

**15.** Conduite flexible selon l'une des revendications précédentes, caractérisée en ce que l'armure comporte une bande enroulée en spirale avec un faible pas.

**16.** Conduite flexible selon la revendication 1, du type comprenant en outre une gaine externe de protection (5), caractérisée en ce que la gaine externe (5) et le tube interne (1) présentent respectivement des coefficients de perméabilité $K_2$ et $K_1$ tels que $K_1 < K_2$.

**17.** Conduite flexible selon la revendication 16, caractérisée en ce que le rapport $K_2/K_1$ est supérieur à 3.

**18.** Conduite selon la revendication 1 du type comprenant en outre une gaine de protection (5), caractérisée en ce que la gaine de protection (5) et le tube interne (1) présentent respectivement des épaisseurs $e_2$ et $e_1$ telles que $e_2$ soit inférieure à $e_1$ et, de préférence avec un rapport $e_1/e_2$ compris entre 3 et 4.

**19.** Conduite flexible selon les revendications 16 à 18, caractérisée en ce que la gaine externe (5) est en polyuréthane et le tube interne en polyéthylène.

**Patentansprüche**

**1.** Biegsames Rohr zum Transportieren eines Fluids unter hohem Druck, des Typs mit mindestens:

- einem dichten Innenrohr (1),
- einer Armierung (2), die mindestens ein Band (10) aufweist, das spiralförmig um eine zentrale Achse (11) des Innenrohrs gewickelt ist, wobei das Band (10) flach ist und mindestens eine Schicht aus Längsfilament-Lunten (6) aufweist, die durch verbindungsmittel, die gewebte Schußfäden aufweisen, miteinander verbunden sind,

dadurch gekennzeichnet, daß der Schuß mit einem Sprung gewebt ist, der mehr als das Fünffache des Durchmessers des Schußfadens ist, daß das Bindematerial (8) mindestens an der Grenzfläche der Filament-Lunten und des Schußgarns angeordnet ist, wobei die verbindungsmittel so angeordnet sind, daß sie auf ihrer ganzen Länge die Längslunten aneinander gepreßt halten und dem Band eine Dichte von mindestens gleich 39% verleihen.

**2.** Biegsames Rohr nach Anspruch 1, dadurch gekennzeichnet, daß der Verlust der Lunten in dem Band unter 10% liegt.

**3.** Biegsames Rohr nach einem der Ansprüche 1 oder 2, dadurch gekennzeichnet, daß die Armierung zwei übereinanderliegende Lagen (3,4) aufweist, die jeweils aus mehreren flachen Bändern (10) bestehen, die spiralförmig gewickelt sind, eine Lage in entgegengesetzter Richtung zur anderen.

**4.** Biegsames Rohr nach Anspruch 1, dadurch gekennzeichnet, daß der Sprung zwischen zwei aufeinanderfolgenden Schußfäden (7) ungefähr 0,5 cm ist.

**5.** Biegsames Rohr nach einem der Ansprüche 1 bis 4, dadurch gekennzeichnet, daß der Schußfaden (7) mit Thermoplaste ummantelt ist.

**6.** Biegsames Rohr nach Anspruch 1, dadurch gekennzeichnet, daß die Längsfilament-Lunten (6) Fasern oder Filamente aus aromatischem Polyamid aufweisen.

**7.** Biegsames Rohr nach Anspruch 6, dadurch gekennzeichnet, daß jede Filament-Lunte mit Thermoplaste (9) ummantelt ist.

**8.** Biegsames Rohr nach einem der Ansprüche 1 bis 5, dadurch gekennzeichnet, daß der Schußfaden (7) aus Fasern aus aromatischem Polyamid ist.

**9.** Biegsames Rohr nach einem der Ansprüche 1 bis 5, dadurch gekennzeichnet, daß der Schußfaden (7) aus Polyesterfasern ist.

**10.** Biegsames Rohr nach Anspruch 1, dadurch gekennzeichnet, daß es ferner ein Antiklebeband (12) aufweist, das mit Überdeckung um die letzte Armierungslage gewickelt ist.

**11.** Biegsames Rohr nach Anspruch 1, dadurch gekennzeichnet, daß das Bindemittel (8,9) weniger als 40 Volumenprozent des flachen Armierungsbands hat.

12. Biegsames Rohr nach einem der vorstehenden Ansprüche, dadurch gekennzeichnet, daß der mittlere Durchmesser des Schußfadens (7) ungefähr gleich einem Drittel des Durchmessers des Kettfadens (6) ist.

13. Biegsames Rohr nach einem der vorstehenden Ansprüche, dadurch gekennzeichnet, daß das dichte Innenrohr ein aufwickelbares Metallrohr ist.

14. Biegsames Rohr nach einem der Ansprüche 1 bis 12, dadurch gekennzeichnet, daß das dichte Innenrohr ein Polymerrohr ist.

15. Biegsames Rohr nach einem der vorstehenden Ansprüche, dadurch gekennzeichnet, daß die Armierung ein spiralförmig gewickeltes Band mit einem geringen Sprung aufweist.

16. Biegsames Rohr nach Anspruch 1, des Typs, der ferner einen äußeren Schutzmantel (5) aufweist, dadurch gekennzeichnet, daß der äußere Mantel (5) und das Innenrohr (1) jeweils Permeabilitätskoeffizienten $K_2$ und $K_1$ aufweisen, wobei $K_1 < K_2$.

17. Biegsames Rohr nach Anspruch 16, dadurch gekennzeichnet, daß das Verhältnis $K_2/K_1$ größer als 3 ist.

18. Biegsames Rohr nach Anspruch 1 des Typs, der ferner einen Schutzmantel (5) aufweist, dadurch gekennzeichnet, daß der Schutzmantel (5) und das Innenrohr (1) jeweils Dicken $e_2$ und $e_1$ aufweisen, so daß $e_2$ kleiner als $e_1$ ist und vorzugsweise mit einem Verhältnis $e_1/e_2$ zwischen 3 und 4.

19. Biegsames Rohr nach den Ansprüchen 16 bis 18, dadurch gekennzeichnet, daß der äußere Mantel (5) aus Polyurethan und das Innenrohr aus Polyethylen ist.

**Claims**

1. Flexible pipe for conveying a fluid under high pressure, of the type comprising at least :

    - a leakproof inner tube (1),
    - a reinforcement (2) comprising at least one band (10) wound spirally around a central axis (11) of the said inner tube,

    said band (10) being flat and having at least one layer of longitudinal filamentary slivers (6) which are assembled together by assembling means comprising a loose woven weft, characterized in that the weft is weaved with a pitch greater than five times the diameter of the weft thread, and in that binding material (8) is arranged at least at the interface of the said filamentary slivers and of the said weft, the said assembly means being designed so as to keep the longitudinal slivers closely packed against one another over their entire length and to impart a compactness at least equal to 39% to the said band.

2. Flexible pipe according to claim 1, characterized in that the weakening of the slivers in the band is below 10 %.

3. Flexible pipe according to one of claims 1 or 2, characterized in that the reinforcement comprises two superposed laps (3, 4), each consisting of a plurality of flat bands (10) wound spirally in opposite directions from one lap to the other.

4. Flexible pipe according to claim 1, characterized in that the pitch between two consecutive weft threads (7) is approximately 0.5 cm.

5. Flexible pipe according to one of claims 1 to 4, characterized in that the weft thread (7) is sheathed with thermoplastic.

6. Flexible pipe according to claim 1, characterized in that the longitudinal filamentary slivers (6) comprise fibres or filaments made from aromatic polyamide.

7. Flexible pipe according to claim 6, characterized in that each filamentary sliver (6) is sheathed with thermoplastic (9).

8. Flexible pipe according to one of claims 1 to 5, characterized in that the weft thread (7) is made from aromatic polyamide fibres.

9. Flexible pipe according to one of claims 1 to 5, characterized in that the weft thread (7) is made from polyester fibres.

10. Flexible pipe according to claim 1, characterized in that it comprises, futhermore, an anti-adhesion band (12) wound, with covering, around the last reinforcing lap.

11. Flexible pipe according to claim 1, characterized in that the binding material (8, 9) is below 40 % by volume of the flat reinforcing band.

12. Flexible pipe according to one of the preceding claims, characterized in that the mean diameter of the weft thread (7) is equal to approximately one third of the diameter of the warp thread( 6).

**13.** Flexible pipe according to any one of the preceding claims, characterized in that the leakproof inner tube is a windable metallic tube.

**14.** Flexible pipe according to one of claims 1 to 12, characterized in that the leakproof inner tube is a polymeric tube.

**15.** Flexible pipe according to one of the preceding claims, characterized in that the reinforcement comprises a band wound spirally at a low pitch.

**16.** Flexible pipe according to claim 1, of the type comprising, furthermore, a protective outer sheath (5), characterized in that the outer sheath (5) and the inner tube (1) have respectively coefficients of permeability $K_2$ and $K_1$, such that $K_1 < K_2$.

**17.** Flexible pipe according to claim 16, characterized in that the ratio $K_2/K_1$ is greater than 3.

**18.** Pipe according to claim 1, of the type comprising, futhermore, a protective sheath (5), characterized in that the protective sheath (5) and the inner tube (1) have respectively thicknesses $e_2$ and $e_1$, such that $e_2$ is below $e_1$, preferably in the ration $e_1/e_2$ between 3 and 4.

**19.** Flexible pipe according to claims 16 to 18, characterized in that the outer sheath (5) is made of polyurethane and the inner tube of polyethylene.

EP 0 853 739 B1

FIG.1

FIG.2

P

FIG.3

6'

FIG.4

11